# FASCICULE DE BREVET EUROPEEN

(11) **EP 1 493 051 B1**
(45) Date de publication et mention de la délivrance du brevet: **27.06.2012**
(21) Numéro de dépôt: 03738217.3
(22) Date de dépôt: 04.04.2003
(51) Int. Cl.: G02B 6/00

(54) **APPAREIL DE RETRO-ECLAIRAGE**
RÜCKBELEUCHTUNGSEINRICHTUNG
BACKLIGHTING APPARATUS

(30) Priorité: 05.04.2002 FR 0204258
(43) Date de publication de la demande: 05.01.2005
(73) Titulaire: PHLOX, 13854 Aix-Les-Milles, Cedex 3 (FR)
(72) Inventeur: BLANC, Christophe, F-84160 Lourmarin (FR)
(74) Mandataire: Marchand, André
(86) Numéro de dépôt international: PCT/FR2003/001060
(87) Numéro de publication internationale: WO 2003/085428

(56) Documents cités:
- EP-A- 0 510 421
- EP-A- 0 561 329
- EP-A- 0 945 674
- EP-A- 1 107 048
- WO-A-98/15862
- US-A- 5 999 685
- US-A- 6 036 328

## Description

La présente invention est relative aux guides de lumière servant à faire du rétro-éclairage ou de l'éclairage, qui sont obtenus par usinage laser.

L'invention s'applique plus précisément aux guides de lumière en forme de plaque mince, généralement plane, constitués d'un matériau translucide ou transparent, en particulier du verre, du polycarbonate ou du polyméthacrylate de méthyle.

De tel guides rentrent notamment dans la constitution de dispositifs d'affichage lumineux tel que les enseignes ou la signalétique, dans la constitution de terminaux d'affichage d'ordinateurs et d'appareils électroniques similaires, en particulier pour le rétro éclairage d'écrans à cristaux liquides et l'éclairage d'un objet, notamment pour la vision de l'objet par une caméra en vue du contrôle automatisé des propriétés de l'objet.

Le document WO-9815862 décrit un dispositif pour collimater et dévier la lumière émise par deux diodes, vers la tranche d'un guide plan de rétro-éclairage ; le dispositif comporte un prisme et des rangées de microprismes ou microrainures s'étendant approximativement le long de la direction moyenne de propagation dans le prisme, qui guident la lumière par réflexion et réfraction.

Le document US-5999685 décrit un guide plan de rétro-éclairage obtenu par moulage de résine dans un moule métallique, dont chacune des deux faces (avant et arrière) comporte une série de portions de prismes triangulaires isocèles parallèles, dont l'angle au sommet est voisin de 150 degrés ; les arêtes des prismes d'une face s'étendent perpendiculairement aux arêtes des prismes de l'autre face ; ces prismes dévient la lumière par réfraction et réflexion.

Par ailleurs, il est connu des documents EP-945674 et EP-1107048 d'usiner des motifs diffusants linéaires d'espacement régulièrement variable à l'aide d'un faisceau laser.

De tel guides sont éclairés par des sources positionnées le long d'une ou deux tranches généralement opposées, ce qui limite le flux maximum de lumière pouvant être ré-émis sur la surface principale du guide.

Le document EP-561329 décrit un appareil lumineux comportant un guide rectangulaire éclairé le long de ses quatre cotés ou tranches par des tubes fluorescents à cathode froide ; l'appareil comporte un diffuseur plan recouvrant la face émettrice (face avant) du guide rectangulaire, et un réflecteur recouvrant la face arrière de ce guide ; sur cette face arrière sont imprimées de minuscules surfaces rugueuses disposées selon différents motifs, selon que l'épaisseur du de la guide est uniforme ou au contraire variable.

Le brevet US6036328 décrit un appareil d'édairage selon le préambule revendication 1.

La présente invention a pour objet de proposer un guide de lumière améliore.

Un objectif de l'invention est de proposer des guides de lumière en forme de plaque mince et des appareils d'éclairage intégrant de tels guides éclairés par leurs tranches, qui remédient, en partie au moins, aux inconvénients des guides et appareils d'éclairage connus.

Conformément à l'invention, il est proposé un appareil selon la revendication 1, une des faces du guide comporte un réseau de motifs diffusants linéaires irréguliers et/ou rugueux qui sont formés dans la matière du guide et qui se croisent.

Chaque motif diffusant linéaire (allongé selon une droite ou une courbe) est généralement composé d'une dépression ou rainure (dite centrale), dont la profondeur est comprise entre 1 et 70 microns et plus particulièrement entre 10 et 30 microns, dont la largeur est comprise entre 10 et 150 microns, en particulier voisine de 20 à 60 microns, et dont le profil (transversal) le long de l'axe longitudinal de la rainure est irrégulier et/ou variable.

Chaque dépression forme une rigole le long de chacun des bords de laquelle s'étend une zone (ou bande latérale) de saillies et dépressions irrégulièrement formées, de largeur voisine de (et généralement au maximum égale à) la moitié de cette de la dépression centrale, et généralement plus petite que cette moitié.

De préférence, la largeur moyenne d'un motif diffusant (composé de ladite dépression ou rainure et des deux bandes latérales) est supérieure à 40 microns et inférieure à 200 microns, en particulier comprise entre 50 et 120 microns.

Ces motifs linéaires sont obtenus par usinage au laser de la plaque du guide, de façon similaire au procédé décrit dans le document EPI 107048.

Il a été constaté que de tels guides présentent des performances très nettement améliorées ; il semble probable que la formation par un faisceau laser d'une rainure irrégulière croisant autre une rainure irrégulière préalablement formée sur la même face du guide, ce qui provoque la formation, à l'intersection de ces deux rainures, d'aspérités de forme irrégulière supplémentaires, contribue à l'augmentation du caractère diffusant de ces motifs et de l'efficacité optique du guide, à tel point qu'un guide supplémentaire pour collimater et/ou concentrer la lumière émise par une source vers la tranche du guide plan n'est pas nécessaire.

Des résultats particulièrement satisfaisants ont été obtenus avec des guides de PMMA d'épaisseur voisine de 1 à 2 millimètres éclairés le long de leurs quatre tranches par quatre séries de diodes électroluminescentes (LED) de type CMS solidaires d'un circuit imprimé entourant le guide.

L'espace entre deux motifs successifs d'un des deux réseaux de motifs parallèles (et parallèles à la tranche du guide et/ou à la source lumineuse) varie sensiblement régulièrement et de façon non monotone : la distance entre deux segments ou motifs diffusants adjacents diminue lorsqu'on s'éloigne d'une tranche dans laquelle est injectée la lumière, puis augmente lorsque l'on se rapproche de la tranche opposée d'injection de lumière.

Les deux réseaux se croisant, ceux ci forment un quadrillage dont les dessins géométriques (mailles) présentent une aire qui diminue sensiblement régulièrement et de façon monotone au fur et à mesure que l'on se rapproche du centre du guide de lumière.

Selon des modes préférés de réalisation
- Les motifs diffusants comportent des rainures croisées ;
- Les rainures s'étendent selon deux directions (Ox, Oy) sensiblement orthogonales de façon à former un réseau de motifs diffusants à mailles rectangulaires ;
- La plaque est rectangulaire et comporte quatre tranches opposées et parallèles deux à deux, l'appareil comportant quatre sources de lumière respectivement disposées le long des quatre tranches de la plaque ;
- Les sources de lumière présentent des couleurs ou spectres d'émission visible différents ;
- les sources sont des LED (Light Emiting diodes) CMS blanches bien que dans certaines applications on puisse utiliser des CCFL (cold Cathod Fluorescent lamps) ;
- Chaque motif diffusant comporte une rainure ou dépression rectiligne ainsi que des saillies s'étendant le long de chaque rainure ou dépression, de part et d'autre de celle-ci.

un guide de lumière comportant une plaque présentant deux faces parallèles et deux tranches parallèles opposées, une première face comportant une pluralité de premiers motifs diffusants, comporte des deuxièmes motifs diffusants croisant les premiers motifs diffusants, c'est à dire s'étendant selon une seconde direction oblique par rapport à la première direction selon laquelle s'étendent les premiers motifs.

Selon des modes préférés de réalisation du guide :
- Le guide comporte une première pluralité de premiers motifs diffusants rectilignes parallèles entre eux et dont l'espacement varie monotonement ou non sensiblement selon une première progression géométrique, ainsi qu'une seconde pluralité de deuxième motifs diffusants rectilignes parallèles entre eux et dont l'espacement varie monotonement ou non sensiblement selon une seconde progression géométrique, lesdits premiers motifs diffusants s'étendant selon une première direction qui est oblique, de préférence orthogonale, par rapport à la direction des deuxièmes motifs diffusants ;
- Les premiers motifs diffusants et les deuxièmes motifs diffusants s'étendent sur la première face de la plaque ;
- Ces motifs diffusants comportent une dépression centrale et des saillies périphériques disposées de part et d'autre de ladite dépression ;
- La dépression centrale est en forme de rainure de profondeur situé entre 10 et 30 microns ;
- La rainure centrale est de largeur moyenne comprise entre 20 et 60 microns et la largeur moyenne des motifs diffusants est comprise entre 50 et 120 microns ;
- Les motifs diffusants forment un quadrillage et la forme générée par ce quadrillage (les mailles) diminue sensiblement régulièrement et de façon monotone en se rapprochant du centre du guide. Pour la fabrication d'un guide de lumière en forme de plaque dont une face comporte une pluralité de motifs diffusants obtenus à l'aide d'un faisceau laser, on expose ladite face à un rayonnement dont l'intensité est située dans une plage allant de 10 à 10 w/cm², de manière à former des irrégularités en surface et en profondeur, et de sorte que chacun desdits motifs comporte une dépression centrale et des saillies périphériques disposées de part et d'autre de ladite dépression centrale ; on utilise un matériau choisi parmi le verre, le polycarbonate et le polyméthacrylate de méthyle ;on forme d'abord un premier réseau de premiers motifs diffusants sensiblement parallèles et on forme ensuite un deuxième réseau de deuxième motifs diffusants sensiblement parallèles qui s'étendent sensiblement orthogonalement, par rapport aux premiers motifs diffusants.

Il a été constaté que les guides de lumière selon l'invention ont un excellent rendement et permettent d'obtenir une excellente uniformité sur toute la surface du guide, que la lumière soit injectée le long de deux cotés opposés ou le long des quatre côtés. Il a été en outre constaté que le rendement (lumière émise par les sources servant à injecter la lumière / lumière émise par le guide) était identique en cas de double ou quadruple injection de lumière. Il a été constaté également que les guides de lumière selon l'invention étaient particulièrement adaptés pour obtenir une diffusion très homogène de la lumière issue d'une pluralité de sources (leds).

D'autres avantages et caractéristiques de l'invention seront compris au travers de la description suivante qui se réfère aux dessins annexés, qui illustrent sans aucun caractère limitatif des modes préférentiels de réalisation de l'invention.

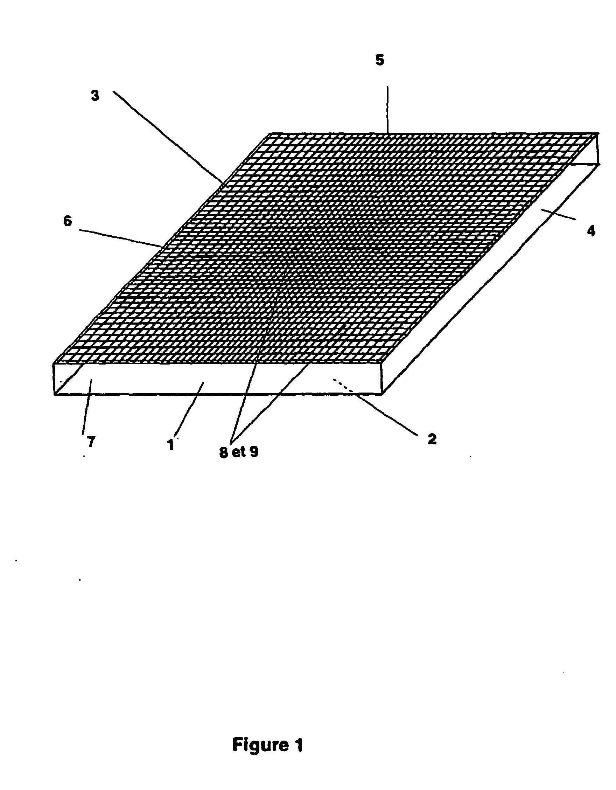

La figure 1 illustre en perspective schématique un guide de lumière comportant une plaque 1 présentant deux faces parallèles 2 et 3 et deux tranches parallèles opposées 4 et 6, une première face 3 comportant une pluralité de premiers motifs diffusants 8 , caractérisé en ce qu'il comporte des deuxièmes motifs diffusants 9 croisant les premiers motifs diffusants. Dans le dessin (quadrillage) formé par le croisement des deux séries de motifs diffusants sur une même face 3, les mailles du quadrillage diminuent en se rapprochant du centre.

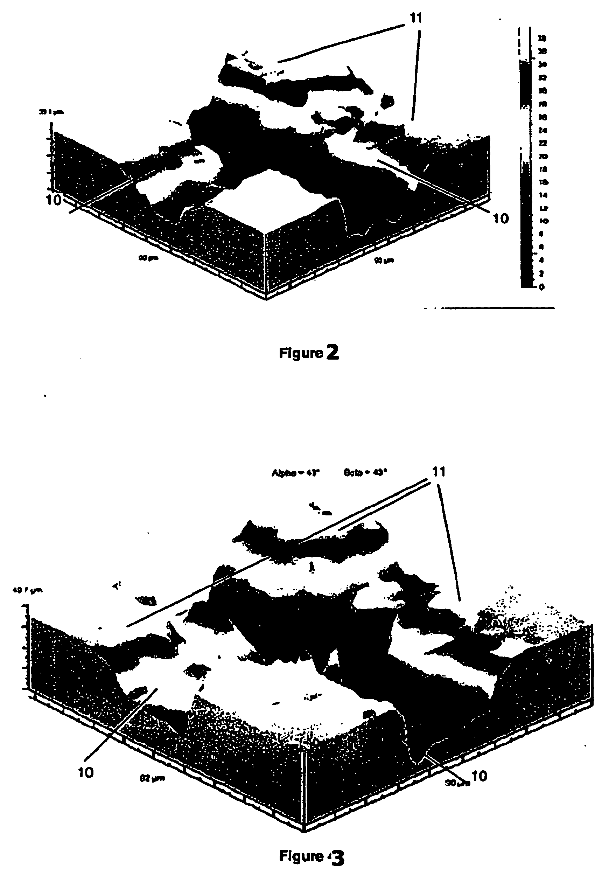

La figure 2 et la figure 3 représentent une vue en trois dimension du croisement de deux motifs diffusants avec la rigole centrale 10 et les saillies 11 longeant cette rigole centrale. Sur la figure 2 en particulier, on peut constater le caractère hétérogène et en partie obturées de certaines rainures. Nonobstant ce fait, force est de constater que le guide de lumière garde toute son efficacité.

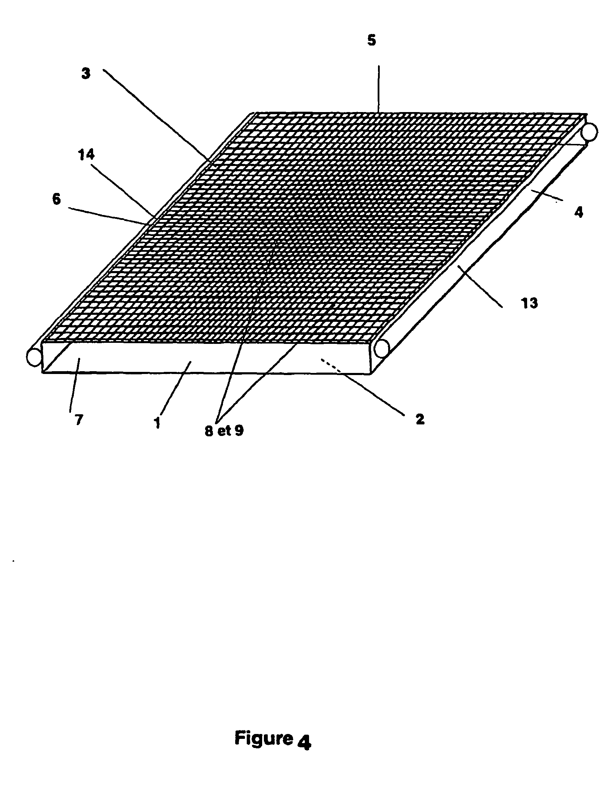

La figure 4; illustre un guide de lumière composé d'une plaque 1 sur laquelle les premiers motifs diffusants 8 et les deuxièmes motifs diffusants 9 s'étendent sur la première face 3. Sur ses tranches opposées 4 et 6, de la lumière est injecté à l'aide de sources 13 et 14. Il a été donné de constater que l'uniformité était en tout point équivalente lors de l'emploi de sources sur les quatre tranches 4, 5, 6, 7.

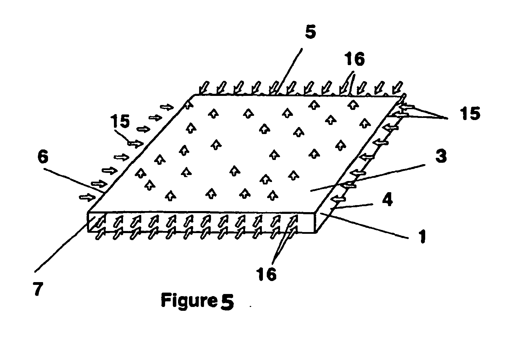

La figure 5 montre qu'il est possible d'utiliser des sources d'intensités différentes (luminance des sources 16 > luminance des sources 15) afin de changer à volonté le niveau de luminance sur la surface du guide de lumière 1 tout en conservant le même niveau d'uniformité. Cet éclairage permettrait, par exemple, de rétro-éclairer un écran à cristaux liquides avec :
un mode « jour », dans lequel les quatre tranches 4, 5, 6, 7 sont éclairées par les sources 15 et 16,
un mode « nuit », dans lequel seules les tranches 4 et 6 sont éclairées par les sources 15, ce qui permet l'utilisation de jumelles amplificatrices pour la vision nocturne.

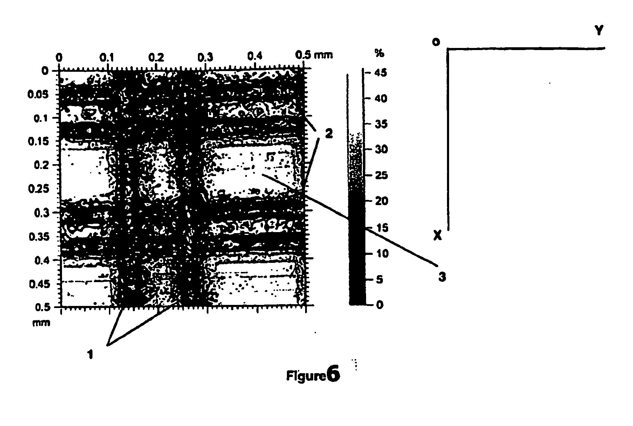

La figure 6 montre une photo d'une pardon de guide. Sur la surface 3, les motifs diffusants 1 sont orientés selon un axe OX et les deuxièmes motifs diffusants 2 sont orientés selon un axe OY. Là encore, on peut constater le caractère hétérogène et en partie obturé de certaines rainures

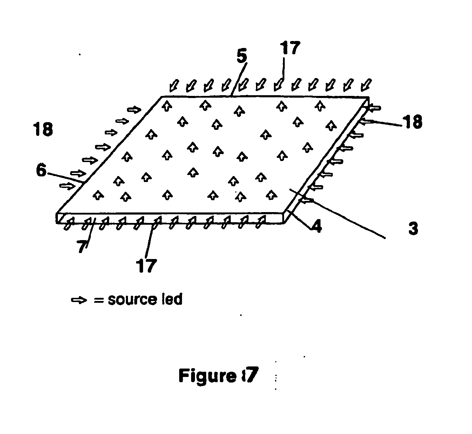

La figure 7 montre qu'il est également possible, en utilisant des sources 17 et 18 ayant des longueurs d'onde différentes de faire du séquencement de couleur, c'est à dire d'alterner l'éclairage des sources 18 sur les tranches 4 et 6 et l'éclairage des sources 17 sur les tranches 5 et 7, et/ou de mélanger les deux longueurs d'onde afin de créer un nouveau spectre d'émission à la surface 3 du guide 1 en utilisant simultanément les sources 18 et 17 sur les quatre tranches 4, 5, 6, 7.

L'invention a permis de réaliser des appareils de rétro-éclairage présentant une surface émettrice allant de 25 à 700 cm², une luminance allant de 4000 à 16000 candela/m², une uniformité du flux lumineux émis supérieure à 90°k et généralement supérieure à 95%, une épaisseur totale (incluant la structure mécanique de support et de protection des LED) allant de 5 à 10 mm, et dont la température maximale en fonctionnement n'excédait pas la température ambiante de plus de 10 à 25 degrés Celsius.

## Revendications

1. Appareil d'éclairage qui comporte :
- un guide de lumière comportant une plaque (1,12) rectangulaire comportant quatre tranches (4,6) opposées et parallèles deux à deux, et dont une face (3) présente des premiers motifs (8) rectilignes parallèles entre eux et dont l'espacement varie, ainsi que des seconds motifs rectilignes parallèles entre eux et dont l'espacement varie, lesdits premiers motifs s'étendant selon une première direction (Ox) qui est orthogonale à la direction (Oy) des seconds motifs, les seconds motifs croisant les premiers motifs, les motifs formant un quadrillage,
- une source (13,14) de lumière disposée le long d'une des tranches de la plaque,
**caractérisé en ce qu'**il comporte quatre sources (13 à 18) de lumière respectivement disposées le long des quatre tranches de la plaque, chacune des sources comportant une série de LED,
**en ce que** les premiers motifs et les seconds motifs sont des motifs diffusants qui comportent des rainures (10) formées dans la plaque, bordées par deux bandes de saillies et dépressions, et dont le profil transversal le long de l'axe longitudinal de la rainure est irrégulier,
et **en ce que** l'aire des mailles du quadrillage diminue régulièrement et de façon monotone en se rapprochant du centre du guide.

2. Appareil selon la revendication 1 dans lequel les sources de lumière présentent des couleurs ou spectres d'émission de lumière visible différents.

3. Appareil selon l'une quelconque des revendications 1 ou 2 dans lequel chacune des sources comporte une série de LED CMS de couleur sensiblement blanche soudées sur un circuit imprimé qui entoure la plaque.

4. Appareil selon l'une quelconque des revendications 1 à 3 dans lequel la face (3) présente une luminance supérieure à 1000 CD/m2.

5. Appareil selon l'une quelconque des revendications 1 à 4 dans lequel la face (3) présente une luminance au moins égale à 4000 cd/m2.

6. Appareil selon l'une quelconque des revendications 1 à 5 dans lequel la face (3) présente une luminance située dans une plage allant de 5000 à 20000 cd/m2.

7. Appareil selon l'une quelconque des revendications 1 à 6 dans lequel la plaque comporte des aspérités de forme irrégulière formées à l'intersection de certaines rainures se croisant, et obstruant partiellement ces rainures.

8. Appareil selon l'une quelconque des revendications 1 à 7 dans lequel la profondeur des rainures est située entre 10 et 30 microns.

9. Appareil selon l'une quelconque des revendications 1 à 8 dans lequel les rainures sont de largeur moyenne comprise entre 20 et 60 microns et la largeur moyenne des motifs diffusants est comprise entre 50 et 120 microns.

## Claims

1. Lighting apparatus that comprises:
• a light guide comprising a rectangular plate (1, 12) having four edge faces (4, 6) that are opposite and parallel in pairs, and having a main face (3) that presents first mutually parallel rectilinear patterns (8) of spacing that varies, and second mutually parallel rectilinear patterns of spacing that varies, said first patterns extending in a first direction (Ox) that is orthogonal to the direction (Oy) of the second patterns, the second patterns crossing the first patterns, the patterns forming a grid; and
• a light source (13, 14) arranged along an edge face of the plate;
the apparatus being **characterized in that** it has four light sources (13 to 18) arranged respectively along the four edge faces of the plate, each light source comprising a series of LEDs;
**in that** the first and second patterns are light-diffusing patterns comprising grooves (10) formed in the plate, bordered by two strips of projections and depressions, and of irregular transverse profile along the longitudinal axis of the groove; and
**in that** the area of the meshes in the grid diminishes regularly and monotonically on approaching the center of the light guide.

2. Apparatus according to claim 1, wherein the light sources present different visible-light emission spectra or colors.

3. Apparatus according to claim 1 or claim 2, wherein each of the sources comprises a series of SMC LEDs of substantially white color soldered on a printed circuit that surrounds the plate.

4. Apparatus according to any one of claims 1 to 3, wherein the main face (3) presents luminance greater than 1000 cd/m².

5. Apparatus according to any one of claims 1 to 4, wherein the main face (3) presents luminance of not less than 4000 cd/m².

6. Apparatus according to any one of claims 1 to 5, wherein the main face (3) presents luminance situated in a range 5000 cd/m² to 20,000 cd/m².

7. Apparatus according to any one of claims 1 to 6, wherein the plate includes roughnesses of irregular shape formed at the intersections of some of the crossing grooves, and partially obstructing the grooves.

8. Apparatus according to any one of claims 1 to 7, wherein the depth of the grooves lies in the range 10 microns to 30 microns.

9. Apparatus according to any one of claims 1 to 8, wherein the grooves have a mean width lying in the range 20 microns to 60 microns and the diffusing patterns have a mean width lying in the range 50 microns to 120 microns.

## Patentansprüche

1. Beleuchtungsvorrichtung, die umfaßt:
• einen Lichtleiter, der eine rechteckige Platte (1, 12) umfaßt, die vier gegenüberliegende und paarweise parallel zueinander angeordnete Teilabschnitte (4, 6) aufweist, deren eine Seite (3) erste geradlinige und parallel zueinander angeordnete Motive (8) aufweist, deren Abstand variiert, sowie zweite geradlinige und parallel zueinander angeordnete Motive aufweist, deren Abstand variiert, wobei die ersten Motive sich in eine erste Richtung (Ox) erstrecken, die rechtwinklig zu der Richtung (Oy) der zweiten Motive ist, wobei die zweiten Motive die ersten Motive kreuzen und die Motive ein Raster bilden,
• eine Lichtquelle (13, 14), die entlang eines der Teilabschnitte der Platte angeordnet ist,
• **dadurch gekennzeichnet, daß** sie vier Lichtquellen (13 bis 18) aufweist, die jeweils entlang der vier Teilabschnitte der Platte angeordnet sind, wobei jede der Lichtquellen eine Serie von LEDs aufweist,
• wobei die ersten Motive und die zweiten Motive diffundierende Motive sind, die Rillen (10) aufweisen, die in der Platte ausgebildet sind, die von zwei Streifen von Vorsprüngen und Rücksprüngen umrandet sind und wobei das Querprofil entlang der Längsachse der Rille unregelmäßig ist,
• und wobei die Fläche der Maschen des Rasters regelmäßig und linear zum Zentrum des Lichtleiters hin abnimmt.

2. Beleuchtungsvorrichtung gemäß Anspruch 1, in der die Lichtquellen unterschiedliche Farben oder Emissionsspektren im Bereich des sichtbaren Lichtes aufweisen.

3. Beleuchtungsvorrichtung gemäß einem der Ansprüche 1 oder 2, wobei jede der Lichtquellen eine Serie von CMS-LEDs von im Wesentlichen weißer Farbe aufweist, die auf einen Schaltkreis, der die Platte umgibt, aufgelötet ist.

4. Beleuchtungsvorrichtung gemäß einem der Ansprüche 1 bis 3, wobei die Seite (3) eine Leuchtdichte von mehr als 1000 cd/m² aufweist.

5. Beleuchtungsvorrichtung gemäß einem der Ansprüche 1 bis 4, wobei die Seite (3) eine Leuchtdichte von mehr als 4000 cd/m² aufweist.

6. Beleuchtungsvorrichtung gemäß einem der Ansprüche 1 bis 5, wobei die Seite (3) eine Leuchtdichte aufweist, die in einem Bereich von 5000 bis 20000 cd/m² aufweist.

7. Beleuchtungsvorrichtung gemäß einem der Ansprüche 1 bis 6, wobei die Platte Rauheiten von unregelmäßiger Form aufweist, die im Kreuzungspunkt von bestimmten sich kreuzenden Rillen ausgebildet sind und die teilweise die Rillen ausfüllen.

8. Beleuchtungsvorrichtung gemäß einem der Ansprüche 1 bis 7, wobei die Tiefe der Rillen zwischen 10 und 30 µm beträgt.

9. Beleuchtungsvorrichtung gemäß einem der Ansprüche 1 bis 8, wobei die Rillen eine mittlere Breite zwischen 20 und 60 µm aufweisen und die mittlere Breite der diffundierenden Motive zwischen 50 und 120 µm beträgt.
